# FASCICULE DE BREVET EUROPEEN

(11) **EP 1 604 275 B1**
(45) Date de publication et mention de la délivrance du brevet: **27.05.2009**
(21) Numéro de dépôt: 04715335.8
(22) Date de dépôt: 27.02.2004
(51) Int. Cl.: G06F 9/445

(54) **PROCEDE DE GESTION DU DECLENCHEMENT D UNE APPLICATION DANS U N TERMINAL DE SERVICE NOTAMMENT DANS UN TERMINAL DE TELECOMMUNICATION**
VERFAHREN ZUR VERWALTUNG DER EINLEITUNG EINER ANWENDUNG IN EINEM DIENSTLEISTUNGSTERMINAL, INSBESONDERE IN EINEM KOMMUNIKATIONSTERMINAL
METHOD FOR MANAGING THE TRIGGERING OF AN APPLICATION IN A SERVICE TERMINAL, PARTICULARLY IN A TELECOMMUNICATION TERMINAL

(30) Priorité: 06.03.2003 FR 0302736
(43) Date de publication de la demande: 14.12.2005
(73) Titulaire: Gemalto SA, 92190 Meudon (FR)
(72) Inventeur: VONG, Robert, Singapour 229619 (SG); YAP-JR, Abraham, Singapour 398265 (SG)
(86) Numéro de dépôt international: PCT/EP2004/050223
(87) Numéro de publication internationale: WO 2004/079478

(56) Documents cités:
- WO-A-00/69183
- WO-A-02/32171
- US-A- 6 125 281

## Description

L'invention concerne un procédé de gestion du déclenchement d'une application dans un terminal de service et notamment dans terminal de télécommunication tel qu'un téléphone mobile.

L'invention s'applique à tout terminal et aux cartes à puces susceptibles de déclencher une application ou d'exécuter une application sur l'arrivée d'un événement de déclenchement. L'invention s'applique également aux applications comprenant des règles de déclenchement en fonction de l'arrivée d'au moins un événement prédéfini.

Dans le contexte d'un terminal de télécommunication de type téléphone mobile, on entend par arrivée d'un événement de déclenchement d'une application, par exemple l'arrivée d'un message court (SMS) ou le début d'un appel effectué sur le téléphone mobile par l'utilisateur.

L'invention s'applique dès lors que des applications, pour des raisons historiques sont liées à des événements de déclenchement si bien que leur déclenchement est lié à l'arrivé d'un événement de déclenchement, lorsque le terminal doit être capable de fonctionner avec des environnements réseaux différents, autrement dit dans un contexte multi-technologie d'accès réseau.

En effet, il existe aujourd'hui en particulier dans les télécommunications une concurrence entre plusieurs technologies supportées par les différents opérateurs.

Le document US A 6 125 281 du 26 septembre 2000 de Huber Rolf et al *divulgue ainsi un mécanisme de test d'application dans un terminal pour gérer le déclenchement de l'application, permettant de déduire si l'application est supportée par le terminal et par ailleurs le document* WO 00/69183 A du 16 novembre 2000 *de Nokia mobile phones divulgue un système de gestion du déclenchement d'une application dans un terminal placé dans un environnement composé de plusieurs technologies d'accès, qui distingue les applications selon les technologies d'accès basés sur les applications identifiers néanmoins ces deux documents ne donnent aucune indication permettant de déduire la technologie d'accès supportée.*

De façon pratique chaque opérateur de réseau téléphonique propose une ou plusieurs technologie d'accès réseau et des programmes applicatifs ci-après dénommés applications, compatibles avec la technologie d'accès réseau de l'opérateur à savoir GSM, UMTS, CDMA, IDEN, ANSI-136, etc.

On recherche aujourd'hui des solutions permettant des accès multi-technologie c'est-à-dire des solutions qui permettent qu'un terminal de service et en particulier un téléphone mobile défini selon des normes et technologies spécifiques puisse fonctionner dans un contexte multi technologies.

La présente invention se situe précisément dans le contexte d'accès réseau multi technologies.

La présente invention permet en effet, à un téléphone mobile défini selon des normes et technologies spécifiques de fonctionner dans un contexte d'accès réseau multi technologies. Plus précisément avec la solution proposée par la présente invention, une application définie par exemple selon la norme GSM et incompatible avec l'accès UMTS, n'entraînera pas un disfonctionnement du téléphone en étant déclenchée.

La présente invention a plus particulièrement pour objet un procédé de gestion du déclenchement d'une application dans un terminal placé dans un environnement composé de plusieurs technologies d'accès, **caractérisé en ce qu**'il comprend :
- à l'arrivée d'un événement de déclenchement d'une application,
- la mise en oeuvre d'un mécanisme de test de l'application à partir d'informations contenues dans l'application testée, permettant de connaître ou de déduire la ou les technologies d'accès réseau supportées par l'application.

Selon un mode de réalisation, le mécanisme de test est dans le système d'exploitation du terminal et sa mise en oeuvre comprend :
- la vérification par le terminal :

- d'informations concernant la ou des technologies d'accès réseau courantes,
- d'informations contenues dans l'application lui permettant de connaître ou de déduire la ou les technologies supportées par l'application,
- le déclenchement de l'application uniquement dans le cas où ces informations sont compatibles.

Selon un autre mode de réalisation, le mécanisme de test est dans l'application, et sa mise en oeuvre comprend :
- la vérification par le terminal :

- d'informations concernant la ou des technologies d'accès réseau courantes,
- d'informations contenues dans l'application lui permettant de connaître ou de déduire la ou les technologies supportées par l'application,
- la poursuite de l'exécution de l'application uniquement dans le cas où ces informations sont compatibles.

Selon une autre caractéristique, les informations contenues dans l'application comportent des paramètres de déclenchement à partir de différents modes de fonctionnement de l'application déclarés, permettant de déterminer les aptitudes de l'application c'est-à-dire la ou les technologies d'accès réseau supportés par l'application.

Avantageusement, le mécanisme comporte quatre modes de fonctionnement dont l'un est basé sur des caractéristiques de l'application, l'autre sur l'identification de l'application et le troisième sur des attributs de l'application, un quatrième mode est pris par défaut lorsque aucun des trois autres modes n'est déclaré.

Plusieurs modes de fonctionnement peuvent être déclarés pour une même application.

Le mode par défaut correspond au cas où l'application est indifférente à la technologie d'accès réseau.

Selon une autre caractéristique, le mécanisme utilise des commandes prévues pour lui permettre d'installer une nouvelle application contenant les informations permettant de connaître ou de déduire la ou les technologies supportées par ladite application ou de mettre à jour ces informations ou de lire ces informations.

Un autre objet de la présente invention concerne un terminal de service comprenant des moyens de mémorisation de programme pour mémoriser un programme correspondant au système d'exploitation et une ou plusieurs applications, principalement **caractérisée en ce qu**'il comporte en outre des moyens de mise en oeuvre d'un mécanisme de test d'au moins une application à partir d'informations contenues dans l'application testée, ces informations permettant au système d'exploitation de connaître ou de déduire la ou les technologies d'accès réseau supportées par l'application testée et de vérifier sa compatibilité avec l'accès réseau courant utilisé par le terminal.

Selon une application particulière, le terminal est un terminal de télécommunication du type téléphone mobile équipé d'une carte à puce et il est apte à fonctionner avec un environnement d'accès réseau multi technologie. La ou les application(s) testée(s) et le mécanisme de test sont placés dans la carte à puce du terminal.

Un autre objet de l'invention concerne une carte à puce de terminal de télécommunication principalement **caractérisée en ce qu**'elle comporte des moyens de mise en oeuvre d'un mécanisme de test d'au moins une application qui, à partir d'informations contenues dans l'application testée, permet au système d'exploitation de la carte de connaître ou de déduire la ou les technologies d'accès réseau supportées par l'application testée et de vérifier sa compatibilité avec l'accès réseau courant utilisé par le terminal.

Le mécanisme de test est un programme chargé dans une mémoire de programme non volatile de la carte, appelé par le système d'exploitation de la carte à puce ou intégré dans ledit système.

Un autre objet de l'invention concerne également toute application susceptible d'être exécutée par un terminal de service ou une carte à puce équipant ce terminal placé dans un environnement composé de plusieurs technologies d'accès réseau dés lors quelle comprend des règles de déclenchement en fonction de l'arrivée d'au moins un événement prédéfini et dès lors qu'elle comporte en outre des informations permettant de connaître ou de déduire la ou les technologies d'accès réseau qu'elle supporte.

Selon un mode de réalisation, l'application peut comporter également un mécanisme de test qui va lui permettre, à partir des informations quelle contient, de connaître ou de déduire elle même la ou les technologies d'accès réseau supportées.

D'autres particularités et avantages de l'invention apparaîtront clairement à la lecture de la description qui est donnée ci-après à titre d'exemple non limitatif et en regard des dessins annexés sur lesquels:
- la figure 1, représente un diagramme fonctionnel d'un mécanisme permettant la mise en oeuvre du procédé selon l'invention,
- la figure 2, représente schématiquement une carte à puce apte à mettre en oeuvre le procédé selon l'invention.
La description qui va suivre concerne plus particulièrement l'application de l'invention à un terminal de télécommunication tel qu'un téléphone mobile. Dans une telle application, les applications testées et le mécanisme de test sont dans la carte à puce associée au téléphone mobile.

Pour cela, selon le procédé, on prévoit que toute application installée dans une carte à puce de téléphone mobile comprenne une information qui permet à la carte à puce de savoir directement à partir de cette information ou de déduire de cette information quelle est, ou quelles sont les technologies d'accès supportées par l'application.

Dans l'exemple qui va être décrit, il est prévu que l'information se présente sous la forme d'une donnée comportant plusieurs octets dont un octet permet de paramétrer le ou les modes de fonctionnement de l'application. Ainsi, le système d'exploitation de la carte peut, connaissant le (ou les ) mode(s) de fonctionnement de l'application, connaître ou déduire les aptitudes de l'application à supporter l'une ou l'autre des technologies d'accès existantes.

Un ou plusieurs autres octets permettent de déclarer les technologies existantes susceptibles d'être supportées par l'application et un ou plusieurs autres octets sont prévus pour définir des technologies futures susceptibles d'être supportées par cette application.

En allant lire les informations contenues dans un champ réservé de l'application, la carte est renseignée sur les possibilités de cette application et va pouvoir avec le mécanise prévu qui peut être intégré dans son système d'exploitation, prendre la décision ou non d'activer une application.

La carte va prendre ou non la décision de déclencher l'application si la technologie courante (technologie utilisée par la carte) est compatible avec l'information contenue dans l'application.

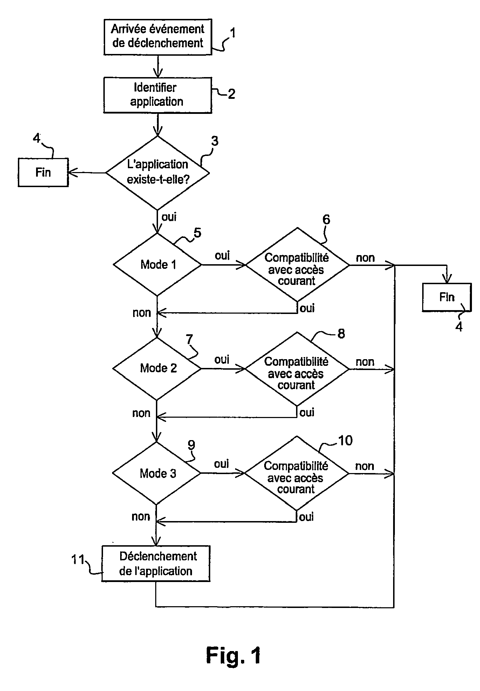

Pour cela, le système d'exploitation de la carte et plus précisément la partie dédiée « toolkit framework » au traitement des commandes « toolkit » va mettre en oeuvre le mécanisme de test illustré par le schéma de la figure 1, lors de l'arrivée d'un événement de déclenchement d'une application.

Pour connaître la technologie courante, il existe trois solutions possibles à savoir :
- Une commande « Terminal Profile » qui décrit les capacités du téléphone mobile,
- Une commande « Provide Local Information » envoyée par la carte au téléphone mobile puis au réseau,
- Le système d'exploitation de la carte possède implicitement l'information. Il est dans ce cas capable de mettre en oeuvre un processus pour que la carte reçoive du réseau l'information.

Dans l'exemple donné, la carte déduit la technologie d'accès réseau supportée par une application à partir des paramètres de déclenchement contenus dans l'application, ces paramètres permettant de déclarer de 1 à 3 modes de fonctionnement pour une application, et un quatrième mode étant pris par défaut lorsque aucun des trois autres n'est déclaré. Le test comporte dans l'exemple une succession de test des trois modes déclarés, chaque mode pris individuellement ne permettant pas obligatoirement de donner une réponse complète sur la technologie supportée par l'application. Les modes déclarés sont les suivants :

### Le mode « 0 »:

C'est le mode qui est pris par défaut par le système d'exploitation de la carte lorsque aucun mode n'est déclaré dans l'application. Aucun mode n'est déclaré lorsque les champs d'enregistrement des paramètres de mode sont vides. Le mode « 0 » signifie que l'application est indépendante des technologies d'accès réseau et qu'elle peut être activée sous n'importe laquelle des technologies réseau.

### Le mode « 1 » :

Ce mode est utilisé lorsque le paramètre mode « 1 » est déclaré dans le champ prévu de l'application. Ce mode signifie que le système d'exploitation est capable de déduire les aptitudes de l'application à partir de la hiérarchie d'héritage, des classes dérivées et des interfaces implémentées.

Il s'agit typiquement d'une application Java. Dans le cas d'une application Java, l'application est étendue à partir de classes ou implémente une interface déterminée. L'environnement d'exécution de Java est capable de savoir qui sont ces classes et l'interface et ainsi de savoir quelles sont les aptitudes dont l'application a hérité car les classes et l'interface impliquées sont habituellement standard et connues. Grâce à cela il est possible pour la carte (le système d'exploitation) de déterminer si l'application supporte ou non une technologie d'accès particulière.

### Le mode « 2 » :

Ce mode est utilisé lorsque le paramètre de mode « 2 » est déclaré dans le champ prévu de l'application. Ce paramètre indique que le système d'exploitation est capable de déduire les aptitudes de l'application au moyen de son identification (son nom) ou autres éléments qui lui permettent d'être reconnue.

L'application possède un code d'identification (Application Identifier : AID), en général de 1 à 16 octets, qui permet de l'identifier de façon unique sur une carte.

Ce code d'identification (ou nom) peut contenir une information sur sa présentation (package), les classes ou associations. A partir de ces informations il est possible au système d'exploitation de déduire les aptitudes de l'application à supporter ou nom l'une ou l'autre des technologies d'accès réseau.

### Le mode « 3 » :

Ce mode est utilisé lorsque le paramètre « 3 » est déclaré dans le champ prévu de l'application.

Ce mode signifie que le système d'exploitation de la carte est capable de déduire les aptitudes de l'application à partir d'attributs quelle contient ou qui lui sont associés. Certains attributs peuvent codés en dur dans les classes, assignés pendant une extentiation ou associés à l'application durant son installation. A partir de ces éléments le système d'exploitation peut déduire les aptitudes de l'application à supporter une technologie d'accès réseau ou non.

Ainsi, par exemple, lorsqu'une application est installée, certains paramètres d'installation sont fournis pour identifier les technologies d'accès que l'application peut supporter, ces paramètres sont stockés sur la carte et associé à l'application.

Lorsqu'un événement de déclenchement survient, le système d'exploitation de la carte récupère les paramètres et détermine si l'application peut supporter ou non la technologie d'accès de la carte (accès courant). Si la technologie supportée par l'application est compatible avec la technologie courante de la carte alors la carte déclenche l'application, sinon la carte ne déclenche pas l'application.

Les tableaux qui suivent sont donnés à titre d'exemple.

Ils représentent une illustration de l'information contenue dans une application pour permettre comme on l'a vu de connaître ou de déduire la ou les technologies d'accès réseau supportées par l'application.

Cette information se présente dans l'exemple sous la forme de 6 octets comme détaillé ci-dessous :

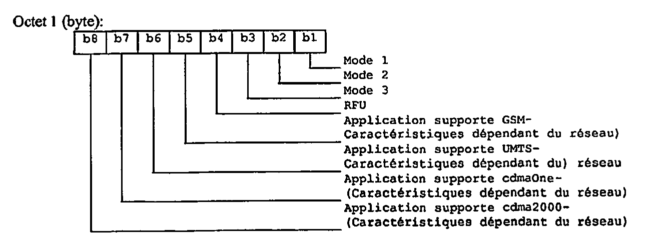

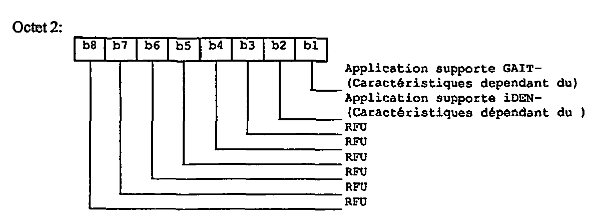

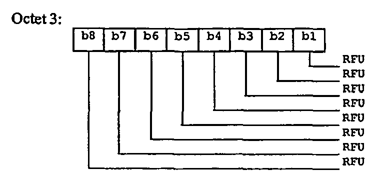

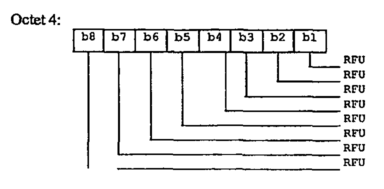

Le tableau suivant illustre un exemple d'information déclarée dans une application et sa signification. Les données sont en hexadécimal.

| **Activation selective de mode** | | | | **Description** |
|---|---|---|---|---|
| **Octet 1** | **Octet 2** | **Octet 3** | **Octet 4** | |
| '01h' | 'XXh' | 'XXh' | 'XXh' | L'application utilise Mode 1, ces aptitudes peuvent être déduites de ces héritages. |
| '02h' | 'XXh' | 'XXh' | 'XXh' | L'application utilise Mode 2, ces aptitudes peuvent être déduites à partir de son identification. |
| '14h' | '00h' | '00h' | '00h' | L'application utilise Mode 3 pour indiquer qu'elle ne supporte que l'accès GSM. |
| '34h' | '00h' | '00h' | '00h' | L'application utilise Mode 3 pour indiquer qu'elle supporte l'accès GSM et UMTS |
| '85h' | '00h' | '00h' | '00h' | L'application utilise Mode 3 pour indiquer qu'elle supporte CDMA2000, et Mode 1 est utilise en même temps pour indiquer ses aptitudes dans ce contexte. |

On va maintenant décrire le procédé mis en oeuvre par le mécanisme illustré par le diagramme fonctionnel de la figure 1. Les étapes y sont référencées de 1 à 11.

A l'arrivée d'un événement d'activation 1, le système d'exploitation identifie l'application concernée 2, et vérifie si cette application est dans la carte 3. Si l'application n'est pas dans la carte le mécanisme prend fin 4.

Lorsque l'application est dans la carte, le système d'exploitation vérifie si le mode « 1 » est déclaré 5.

Si ce mode est déclaré, le système d'exploitation déduit quel est l'accès réseau supporté par l'application et si cet accès est compatible avec l'accès courant 6. S'il y a incompatibilité, le mécanisme prend fin et attend un nouvel événement d'activation pour une application.

Dans le cas où il y a compatibilité 6 ou dans le cas où le mode « 1 » n'est pas déclaré, le système d'exploitation vérifie si le mode « 2 » est déclaré 7.

Si c'est le cas, le système d'exploitation déduit quel est l'accès réseau supporté par l'application et si cet accès est compatible avec l'accès courant 8.

S'il y a incompatibilité, le mécanisme prend fin et attend un nouvel événement d'activation pour une application.

Dans le cas où il y a compatibilité 8 ou dans le cas où le mode « 2 » n'est pas déclaré, le système d'exploitation vérifie si le mode « 3 » est déclaré 9.

Si ce mode est déclaré, le système d'exploitation déduit quel est l'accès réseau supporté par l'application et si cet accès est compatible avec l'accès courant 10. S'il y a incompatibilité, le mécanisme prend fin et attend un nouvel événement d'activation pour une application.

Dans le cas où il y a compatibilité 10 ou dans le cas où le mode « 3 » n'est pas déclaré, le système d'exploitation active l'application 11. En effet, comme on l'a vu précédemment, si aucun des modes n'est déclaré cela signifie que l'application est indépendante de la technologie d'accès réseau le mode « 0 » par défaut est appliqué.

Il est prévu en outre avec ce mécanisme, l'utilisation de plusieurs commandes.

Une première commande permet d'installer une nouvelle application sur une carte. Cette commande comporte tous les paramètres que l'on vient de décrire et est envoyée avec l'application nouvelle à charger dans la carte. Cette commande est dénommée « INSTALL » et sa structure de donnée est donnée en annexe 1 de la description.

Cette commande INSTALL est donc envoyée à la carte avec l'application à travers une liaison Hertzienne sous la forme d'un message SMS par exemple.

Dans l'exemple donné la commande comporte cinq octets d'en-tête, qui permettent de spécifier la nature de ladite commande et de 0 à 255 octets de données. La structure de donnée illustrée en annexe montre que le premier octet de donnée spécifie la longueur de l'application AID (Application Identifier) du fichier de chargement « load file », les X octets suivants spécifient la valeur de cet AID, l'octet X+2 spécifie la longueur de l'AID de la classe application, les octets suivants la valeur de cet AID, etc.

Une deuxième commande est prévue, il s'agit de la commande « PUT DATA ». Cette commande permet au système d'exploitation de la carte, de pouvoir effectuer une mise à jour des paramètres de déclenchement d'une application après son installation. Cette commande est détaillée en annexe 2 de la description.

Une troisième commande est prévue, il s'agit de la commande « GET DATA ». Cette commande permet de lire les paramètres de déclenchement de l'application. Cette commande est détaillée en annexe de la description.

Une quatrième commande peut être prévue, il s'agit de la commande « GET STATUS » pour permettre de retrouver les paramètres de déclenchement d'une application. Un exemple de réponse en retour de cette commande est illustré en annexe à la description.

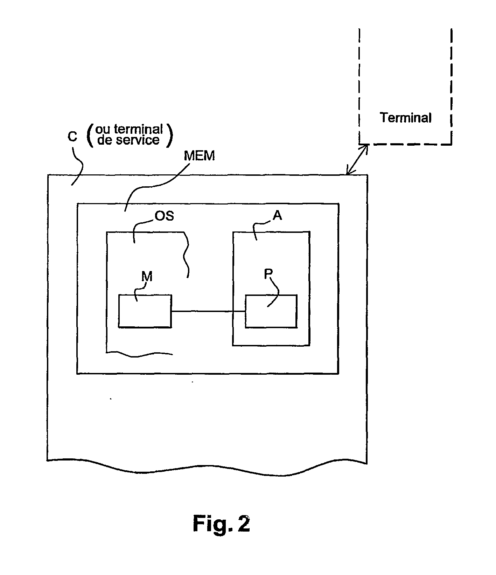

La figure 2 illustre de façon schématique et simplifiée, une mémoire MEM d'une carte à puce C. Cette mémoire représente la ou les mémoires de programme d'une carte à puce de téléphonie mobile. La mémoire illustrée MEM contient des programmes tels que le système d'exploitation de la carte à puce et au moins un programme d'application A.

Selon l'invention le programme du système d'exploitation OS de la carte comporte ou fait appel au mécanisme M illustré par la figure 1. L'application A chargée dans la carte comporte quant à elle les informations c'est-à-dire les paramètres de déclenchement précédemment décrits qui permettent à la carte de savoir ou de déduire quelles sont les technologies d'accès réseau, supportées par l'application.

Dans une variante d'exécution, le mécanisme de test peut être implanté au sein même de l'application. Dans ce cas l'application est déclenchée et au début de son exécution le test est mis en oeuvre. Si le test révèle que l'application est compatible avec l'accès courant alors l'exécution se poursuit sinon l'exécution est arrêtée.

### ANNEXE 1

**Structure de données de la commande « INSTALL »**

| ***M*/*O*** | ***LENGTH*** | ***DESCRIPTION⁽¹⁾*** | | | | |
|---|---|---|---|---|---|---|
| M | 1 | Load file AID length | | | | |
| M | 5 to 16 | Load file AID field | | | | |
| M | 1 | Applet Class AID length | | | | |
| M | 5 to 16 | Applet Class AID | | | | |
| M | 1 | Instance AID length | | | | |
| M | 5 to 16 | Instance AID field | | | | |
| O | 1 | length | | | | |
| O | 0 or 1 | Privilege field | | | | |
| M | 1 | Install Parameter Length | | | | |
| O | ≥ 14 | Install Parameter field in TLV format: | | | | |
| | | ***M*/*O*** | ***LENGTH*** | ***DESCRIPTION*** | | |
| | | O | 1 | Tag of *System specific parameters* field (= EFh) | | |
| | | O | 1 | System specific parameters length | | |
| | | O | ≥ 10 | *System specific parameters* field in TLV format: | | |
| | | | | ***M*/*O*** | ***LENGTH*** | ***DESCRIPTION*** |
| | | | | O | 1 | Tag C8h |
| | | | | O | 1 | Length of next field |
| | | | | O | 2 | *Non-volatile install memory size* |
| | | | | O | 1 | Tag C7h |
| | | | | O | 1 | Length of next field |
| | | | | O | 2 | *Volatile install memory size* |
| | | | | O | 1 | Tag Cah |
| | | | | O | 1 | Length of next field |
| | | | | O | 0 or 6+2n | *GSM applet specific parameters* |
| | | O | 1 | Tag C9h | | |
| | | O | 1 | Length of next field | | |
| | | O | 0 to 32 | *Application specific parameters* field (unformatted) | | |
| | | O | 1 | Tag CBh | | |
| | | O | 1 | Length of next field : 4 | | |
| | | O | 4 | *Selective Triggering parameters* | | |
| M | 1 | Length of next field (Not Checked) | | | | |
| O | 0 | Reserved for *Install token* field (delegation not supported) | | | | |

### ANNEXE 2

**Commande "PUT DATA"**

| ***FIELD*** | ***DESCRIPTION-VALUE*** |
|---|---|
| CLA | 80h or 84h |
| INS | Dah |
| P1 | Data Object Tag Parameter: '00h' |
| P2 | Data Object Tag Parameter: 'C2h' |
| Lc | Data Length plus Put Data Token Length (if present) and MAC Length (if present) |
| Data field | Data, Put Data Token (if present), and MAC (if present) |

**Commande DATA pour TAG 00C2h**

| Length | Description |
|---|---|
| 1 | AID Tag: '4Fh' |
| 1 | AID Data Length: '05h-10h' |
| 5-16 | Application AID Data: 'XX...' |
| 1 | Selective Triggering Parameter Tag: 'CBh' |
| 1 | Selective Triggering Parameter Length: '04h' |
| 4 | Selective Triggering Parameter Data: 'XXXXXXXX' |

**Commande "GET DATA"**

| ***FIELD*** | ***DESCRIPTION- VALUE*** |
|---|---|
| CLA | 80h or 84h |
| INS | Cah |
| P1 | Data Object Tag Parameter: '00h' |
| P2 | Data Object Tag Parameter: 'C2h' |
| Lc | Data Length plus MAC Length (if present) |
| Data field | Data and MAC (if present) |

**Commande DATA pour TAG 00Ch2**

| Length | Description |
|---|---|
| 1 | AID Tag:'4Fh' |
| 1 | AID Data Length: '05h-10h' |
| 5-16 | Application AID Data: 'XX...' |
| 1 | Selective Triggering Parameter Tag: 'XX' (not analyzed) |
| 1 | Selective Triggering Parameter Length: 'XX' (not analyzed) |
| 4 | Selective Triggering Parameter Data: 'XXXXXX' (not analyzed) |

### ANNEXE 3

**Réponse DATA pour TAG 00C2h.**

| Length | Description |
|---|---|
| 1 | AID Tag: '4Fh' |
| 1 | AID Data Length: '05h-10h' |
| 5-16 | Application AID Data: 'XX...' |
| 1 | Selective Triggering Parameter Tag: 'CBh' |
| 1 | Selective Triggering Parameter Length: '04h' |
| 4 | Selective Triggering Parameter Data: 'XXXXXXXX' |

**Commande "GET STATUS"**

| **Length** | **Value** | **Meaning** |
|---|---|---|
| 1 | 'xx' | Length of AID |
| 1-n | 'xxxx...' | AID |
| 1 | 'xx' | Life Cycle State |
| 1 | 'xx' | Application Privileges |
| 4 | 'xxxxxx' | Selective Triggering Parameters |

## Revendications

1. Procédé de gestion du déclenchement d'une application (A) dans un terminal de télécommunication (Terminal) placé dans un environnement composé de plusieurs technologies d'accès, **caractérisé en ce qu'**il comprend :
- suite à l'arrivée d'un événement de déclenchement d'une application (1), la mise en oeuvre d'un mécanisme de test (M) de l'application (A) permettant de connaître ou de déduire, à partir d'informations contenues dans l'application testée (P), la ou les technologies d'accès réseau supportées par l'application.

2. Procédé de gestion du déclenchement d'une application (A) selon la revendication 1, **caractérisé en ce que** le mécanisme de test (M) est dans le système d'exploitation du terminal de télécommunication (Terminal) et **en ce que** sa mise en oeuvre comprend :
- la vérification par le terminal :
- d'informations concernant la ou des technologies d'accès réseau courante,
- d'informations contenues dans l'application (A) lui permettant de connaître ou de déduire la ou les technologies supportées par l'application,
- le déclenchement de l'application uniquement dans le cas où ces informations sont compatibles (11).

3. Procédé de gestion du déclenchement d'une application (A), selon la revendication 1, **caractérisé en ce que** le mécanisme de test (M) est dans l'application, et **en ce que** sa mise en oeuvre comprend :
- la vérification par le terminal de télécommunication (Terminal):
- d'informations concernant la ou des technologies d'accès réseau courante,
- d'informations contenues dans l'application lui permettant de connaître ou de déduire la ou les technologies supportées par l'application,
- la poursuite de l'exécution de l'application uniquement dans le cas où ces informations sont compatibles.

4. Procédé de gestion du déclenchement d'une application (A) selon l'une quelconque des revendications précédentes, **caractérisé en ce que** les informations contenues dans l'application (P) comportent des paramètres de déclenchement à partir de différents modes de fonctionnement de l'application déclarés, permettant de déterminer les aptitudes de l'application c'est-à-dire la ou les technologies d'accès réseau supportés par l'application (A).

5. Procédé de gestion du déclenchement d'une application (A), selon la revendication 4, **caractérisé en ce que** le mécanisme (M) comporte quatre modes de fonctionnement dont l'un est basé sur des caractéristiques de l'application, l'autre sur l'identification de l'application et le troisième sur des attributs de l'application, un quatrième mode qui est pris par défaut lorsque aucun des trois autres modes n'est déclaré.

6. Procédé de gestion du déclenchement d'une application (A) selon la revendication 5, **caractérisé en ce que** plusieurs modes de fonctionnement peuvent être déclarés pour une même application.

7. Procédé de gestion du déclenchement d'une application (A), selon la revendication 5 ou 6, **caractérisé en ce que** le mode par défaut correspond au cas où l'application est indifférente à la technologie d'accès réseau.

8. Procédé de gestion du déclenchement d'une application (A) selon l'une quelconque des revendications précédentes, **caractérisé en ce qu'**il utilise en outre des commandes prévues pour permettre à ce mécanisme d'installer une nouvelle application contenant les informations permettant de connaître ou de déduire la ou les technologies supportées par ladite application, ou de mettre à jour ces informations ou de lire ces informations.

9. Terminal de télécommunication (Terminal) comprenant des moyens de mémorisation de programme (MEM) pour mémoriser un programme correspondant au système d'exploitation (OS) et une ou plusieurs applications (A), **caractérisée en ce qu'**il comporte en outre des moyens de mise en oeuvre d'un mécanisme de test (M) d'au moins une application partir d'informations contenues dans l'application testée (P), ces informations permettant au système d'exploitation de connaître ou de déduire la ou les technologies d'accès réseau supportées par l'application testée et de vérifier sa compatibilité avec l'accès réseau courant utilisé par le terminal.

10. Terminal de télécommunication selon la revendication 9, **caractérisé en ce que** ce terminal est du type téléphone mobile équipé d'une carte à puce (C), et apte à fonctionner avec un environnement d'accès réseau multi technologie et **caractérisé en ce que** l'application testée (A) et le mécanisme de test (M) sont placés dans la carte à puce (C).

11. Carte à puce (C) de terminal de télécommunication (Terminal), **caractérisée en ce qu'**elle comporte des moyens de mise en oeuvre d'un mécanisme de test (M) d'au moins une application (A) qui, à partir d'informations contenues dans l'application testée (P), permet au système d'exploitation (OS) de la carte de connaître ou de déduire la ou les technologies d'accès réseau supportées par l'application testée et de vérifier sa compatibilité avec l'accès réseau courant utilisé par le terminal.

12. Carte à puce (C) de terminal de télécommunication (Terminal) selon la revendication 11, **caractérisée en ce que** le mécanisme de test (M) est un programme chargé dans une mémoire (MEM) de programme non volatile de la carte (C), appelé par le système d'exploitation (OS) de la carte à puce ou intégré dans ledit système.

13. Application (A) susceptible d'être exécutée par un terminal de télécommunication (Terminal) ou une carte à puce (C) équipant ce terminal placé dans un environnement composé de plusieurs technologies d'accès réseau, et comprenant des règles de déclenchement en fonction de l'arrivée d'au moins un événement prédéfini (1) , **caratérisée en ce qu**'elle comporte en outre des informations (P) permettant de connaître ou de déduire la ou les technologies d'accès réseau qu'elle supporte.

14. Application (A) selon la revendication 13, **caractérisée en ce qu'**elle comporte en outre un mécanisme de test (M) lui permettant, à partir des informations quelle contient (P), de connaître ou de déduire la ou les technologies d'accès réseau supportées.

## Claims

1. A method for managing the triggering of an application (A) in a telecommunication terminal placed in an environment composed of several access technologies, **characterised in that** it includes:
- further to the occurrence of an event triggering an application (1), the implementation of a mechanism for testing (M) the application (A) making it possible to know or to deduce from information contained in the tested application (P) the network access technology or technologies supported by the application.

2. A method for managing the triggering of an application (A) according to claim 1, **characterised in that** the test mechanism (M) is in the telecommunication terminal operation system (Terminal) and **in that** the implementation thereof includes:
- the checking by the terminal:
- of information relating to the current network access technology or technologies,
- of information contained in the application (A), making it possible to know or to deduce the technology or technologies supported by the application,
- the triggering of the application only in the case where such information is compatible (11).

3. A method for managing the triggering of an application (A) according to claim (1), **characterised in that** the test mechanism (M) is in the application and that the implementation thereof includes:
- the checking by the telecommunication terminal (Terminal) :
- of information relating to the current network access technology or technologies,
- of information contained in the application making it possible to know or to deduce the technology or technologies supported by the application,
- the continuation of the execution of the application only in the case where such information is compatible.

4. A method for managing the triggering of an application (A) according to anyone of the preceding claims, **characterised in that** the information contained in the application (P) includes triggering parameters from various declared operation modes of the application thus making it possible to determine the capacities of the application, i.e. the network access technology or technologies supported by the application (A).

5. A method for managing the triggering of an application (A) according to claim 4, **characterised in that** the mechanism (M) includes four operation modes, one of which is based on characteristics of the application, the other on the identification of the application, the third one on the attributes of the application and a fourth mode which is taken by default when none of the three other modes is declared.

6. A method for managing the triggering of an application (A) according to claim 5, **characterised in that** several operation modes can be declared for a same application.

7. A method for managing the triggering of an application (A) according to claim 5 or 6, **characterised in that** the mode by default corresponds to the case where the application is indifferent to the network access technology.

8. A method for managing the triggering of an application (A) according to any one of the preceding claims, **characterised in that** it further uses instructions provided to allow this mechanism to install a new application containing the information making it possible to know or to deduce the technology or technologies supported by said application or to update the information or to read such information.

9. A telecommunication terminal (Terminal) comprising program storage means (MEM) for storing a program corresponding to the operation system (OS) and one or several application(s) (A), **characterised in that** it further includes means for implementing a test mechanism (M) of at least one application from information contained in the tested application (P), such information making it possible for the operation system to know or to deduce the network access technology or technologies supported by the application tested and to check the compatibility thereof with the current network access used by the terminal.

10. A telecommunication terminal according to claim 9, **characterised in that** the terminal is of the mobile telephone type provided with a chip card (C) and capable of being operated with a multi-technology network access environment and **characterised in that** the tested application (A) and the test mechanism (M) are placed in the chip card (C).

11. A chip card (C) for a telecommunication terminal (Terminal), **characterised in that** it includes means for implementing a test mechanism (M) for at least one application (A) which, from information contained in the application tested (P), makes it possible for the operation system (OS) of the card to know or to deduce the network access technology or technologies supported by the tested application and to check the compatibility thereof with the current network access used by the terminal.

12. A chip card (C) for telecommunication terminal (Terminal) according to claim 11, **characterised in that** the test mechanism (M) is a program downloaded into a non volatile program memory (MEM) of the card (C), called by the operation system (OS) of the chip card or integrated in said system.

13. An application (A) liable to be executed by a telecommunication terminal (Terminal) or a chip card (C) provided in said terminal placed in an environment composed of several network access technologies and including triggering rules as a function of the occurrence of at least one predefined event (1), **characterised in that** it further includes information (P) making it possible to know or to deduce the network access technology or technologies it supports.

14. An application (A) according to claim 13, **characterised in that** it further includes a test mechanism (M) making it possible, from the information it contains (P), to know or deduce the network access technology or technologies supported.

## Patentansprüche

1. Verwaltungsverfahren für das Auslösen einer Anwendung (A) in einem Telekommunikationsterminal (Terminal), das in eine Umgebung platziert ist, die aus mehreren Zugangstechnologien gebildet wird, **dadurch gekennzeichnet, dass** es Folgendes umfasst:
- Im Anschluss an ein Auslöseereignis einer Anwendung (1) die Umsetzung eines Testmechanismus (M) der Anwendung (A), die ausgehend von in der getesteten Anwendung (P) enthaltenen Informationen die Kenntnis oder die Ableitung der von der Anwendung unterstützten Netzzugangstechnologie oder Netzzugangstechnologien erlaubt.

2. Verwaltungsverfahren für das Auslösen einer Anwendung (A) gemäß Anspruch 1, **dadurch gekennzeichnet, dass** der Testmechanismus (M) sich in dem Betriebssystem des Telekommunikationsterminals (Terminal) befindet und dass seine Umsetzung Folgendes umfasst:
- die Überprüfung durch das Terminal:
- von Informationen bezüglich der aktuellen Netzzugangstechnologie oder Netzzugangstechnologien,
- von in der Anwendung (A) enthaltenen Informationen, die ihr die Kenntnis oder die Ableitung der von der Anwendung unterstützten Technologie oder Technologien erlauben,
- das Auslösen der Anwendung ausschließlich in dem Fall, in dem diese Informationen kompatibel (11) sind.

3. Verwaltungsverfahren für das Auslösen einer Anwendung (A) gemäß Anspruch 1, **dadurch gekennzeichnet, dass** der Testmechanismus (M) sich in der Anwendung befindet und dass seine Umsetzung Folgendes umfasst:
- die Überprüfung durch das Telekommunikationsterminal (Terminal):
- von Informationen bezüglich der aktuellen Netzzugangstechnologie oder Netzzugangstechnologien,
- von in der Anwendung enthaltenen Informationen, die ihr die Kenntnis oder die Ableitung der von der Anwendung unterstützten Technologien erlauben,
- die Fortführung der Ausführung der Anwendung ausschließlich in dem Fall, in dem diese Informationen kompatibel sind..

4. Verwaltungsverfahren für das Auslösen einer Anwendung (A) gemäß einem der vorherigen Ansprüche, **dadurch gekennzeichnet, dass** die in der Anwendung (P) enthaltenen Informationen Auslöseparameter ausgehend von unterschiedlichen Funktionsmodi der erklärten Anwendung enthalten, die die Bestimmung der jeweiligen Fähigkeit der Anwendung erlauben, d. h. der von der Anwendung (A) unterstützten Netztechnologie oder Netztechnologien.

5. Verwaltungsverfahren für das Auslösen einer Anwendung (A) gemäß Anspruch 4, **dadurch gekennzeichnet, dass** der Mechanismus (M) vier Funktionsmodi umfasst, von denen einer auf Merkmalen der Anwendung, der andere auf der Identifikation der Anwendung und der dritte auf den Attributen der Anwendung basiert, ein vierter Modus, der automatisch gewählt wird, wenn keiner der drei anderen Modi erklärt wird.

6. Verwaltungsverfahren für das Auslösen einer Anwendung (A) gemäß Anspruch 5, **dadurch gekennzeichnet, dass** mehrere Funktionsmodi für eine und dieselbe Anwendung erklärt sein können.

7. Verwaltungsverfahren für das Auslösen einer Anwendung (A) gemäß Anspruch 5 oder 6, **dadurch gekennzeichnet, dass** der automatische Modus dem Fall entspricht, in dem die Anwendung unabhängig von der Netzzugangstechnologie ist.

8. Verwaltungsverfahren für das Auslösen einer Anwendung (A) gemäß einem der vorherigen Ansprüche, **dadurch gekennzeichnet, dass** es darüber hinaus Befehle verwendet, die dafür vorgesehen sind, es diesem Mechanismus zu ermöglichen, eine neue Anwendung aufzuspielen, die die Informationen enthält, welche die Kenntnis oder die Ableitung der von der genannten Anwendung unterstützten Netztechnologie oder Netztechnologien erlauben, oder diese Informationen zu aktualisieren oder diese Informationen zu lesen.

9. Telekommunikationsterminal (Terminal), das Programmspeichermittel (MEM) zum Speichern eines Programm umfasst, welches dem Betriebssystem (OS) entspricht, sowie eine oder mehrere Anwendung(en) (A), **dadurch gekennzeichnet, dass** es darüber hinaus Umsetzungsmittel eines Testmechanismus (M) wenigstens einer Anwendung ausgehend von in der getesteten Anwendung () enthaltenen Informationen umfasst, wobei diese Informationen dem Betriebssystem die Kenntnis oder die Ableitung der Netzzugangstechnologie oder Netzzugangstechnologien erlaubt, die von der getesteten Anwendung getestet wird oder werden, und ihre Kompatibilität mit dem aktuellen, vom Terminal genutzten Netzzugang zu überprüfen.

10. Telekommunikationsterminal gemäß Anspruch 9, **dadurch gekennzeichnet, dass** dieses Terminal vom Typ mit einer Chipkarte (C) ausgerüstetem und zum Betrieb mit einer Netzzugangsumgebung mehrerer Technologien geeignetem Mobiltelefon ist und **dadurch gekennzeichnet ist, dass** die getestete Anwendung (A) und der Testmechanismus (M) in der Chipkarte (C) platziert sind.

11. Chipkarte (C) eines Telekommunikationsterminals (Terminal), **dadurch gekennzeichnet, dass** sie Umsetzungsmittel eines Testmechanismus (M) wenigstens einer Anwendung (A) umfasst, die ausgehend von in der getesteten Anwendung (P) enthaltenen Informationen es dem Betriebssystem (OS) der Karte erlaubt, die Zugangsnetzwerktechnologie oder die Zugangsnetzwerktechnologien zu kennen oder abzuleiten, die von der getesteten Anwendung unterstützt wird oder werden und ihre Kompatibilität mit dem aktuellen, vom Terminal verwendeten Zugangsnetzwerk zu überprüfen.

12. Chipkarte (C) eines Telekommunikationsterminals (Terminal) gemäß Anspruch 11, **dadurch gekennzeichnet, dass** der Testmechanismus (M) ein Programm ist, das in einen Speicher (MEM) eines nicht flüchtigen Programms der Karte (C) geladen ist, das von dem Betriebssystem (OS) der Chipkarte angerufen wird oder in das genannte System integriert ist.

13. Anwendung (A), die von einem Telekommunikationsterminal (Terminal) oder einer Chipkarte (C) ausgeführt werden kann, die dieses Terminal ausrüstet, das in eine Umgebung platziert ist, welche aus mehreren Netzzugangstechnologien gebildet wird, und Regeln zum Auslösen in Abhängigkeit von wenigstens einem vordefinierten Ereignis (1) umfasst, **dadurch gekennzeichnet, dass** sie darüber hinaus Informationen (P) umfasst, die die Kenntnis oder die Ableitung der Netzzugangstechnologie oder Netzzugangstechnologien erlaubt, die sie unterstützt.

14. Anwendung (A) gemäß Anspruch 13, **dadurch gekennzeichnet, dass** sie darüber hinaus einen Testmechanismus (M) umfasst, der es ihr erlaubt, ausgehend von Informationen, die sie enthält (P), die unterstützte Netzzugangstechnologie oder die unterstützten Netzzugangstechnologien zu kennen oder abzuleiten.
